# EUROPEAN PATENT APPLICATION

(11) **EP 1 317 958 A1**
(43) Date of publication of application: **11.06.2003**
(21) Application number: 02258399.1
(22) Date of filing: 05.12.2002
(51) Int. Cl.: B01J 20/28

(54) **Flexible adsorbent material**

(30) Priority: 05.12.2001 GB 0129111
(71) Applicant: Carl Freudenberg KG, 69469 Weinheim (DE)
(72) Inventor: Barson, Craig, Freudenberg Nonwovens LP, Halifax, West Yorkshire HX4 8NJ (GB); Lawson, Emma, Freudenberg Nonwovens LP, Halifax, West Yorkshire HX4 8NJ (GB)
(74) Representative: Perry, Robert Edward

(57) **Abstract**

An adsorbent product comprises a flexible substrate and, at and within a face of the substrate, a discontinuous layer of adsorbent material.

## Description

### Field of the Invention

This invention relates to a flexible adsorbent material.

### Background of the Invention

Flexible adsorbent materials are useful components of protective clothing and many other products. For example, in clothing, they can act as a filter, preventing the ingress of harmful materials while allowing the passage of air and moisture, with the intention of minimising physiological load on the wearer.

EP-A-0090073 describes a filter material comprising a flexible substrate carrying adsorbent balls of carbon and a binder. The balls are printed on, for example, a fabric fleece, and cover at least 90% of the surface area of at least one face. The effectiveness of this material is limited by the size of the balls. Further, the balls often become detached in use.

Fusible interlinings are well known. They comprise a fibrous substrate carrying a pattern or layer of a thermoplastic adhesive. Further, GB-A-2077141 discloses gas-adsorbent materials comprising a substrate and carbonaceous material bonded to the substrate, in which a substantial portion of the surfaces of the substrate is substantially free of bonding agent which is printed as a discontinuous layer. The carbonaceous material may be granular.

### Summary of the Invention

According to the present invention, an adsorbent product comprises a flexible fibrous substrate and, at and within a surface of the substrate, a discontinuous layer of adsorbent material.

Such a product may be manufactured by applying the adsorbent material, typically a mixture of carbon particles and a binder, onto discrete areas of the substrate, the mixture having a rheology such that a printed "dot" has a depth extending into the fabric from the surface. Thus, the printing causes the adsorbent material to penetrate the surface of the substrate, without remaining as a discrete dot on the surface, and also without striking through to the opposite surface.

A product of the invention has various advantages over the prior art. Its effectiveness is not limited by the size of discrete carbon-containing balls that can be formed, and its performance can be tailored to the intended use by controlling one or more of various factors such as the size of the printed areas, the proportion of the surface that is covered, and the content of adsorbent material in each area. Further, since the substrate supports the adsorbent material, the product is durable, reducing the likelihood that the adsorbent material will be lost in use, by abrasion or mechanical action. The presence of substrate fibres in the printed areas provides support to the printed material, and prevents it from being removed by abrasive or mechanical action.

### Description of the Invention

The substrate that is used in the invention is preferably a lofty non-woven fabric. It may be any flexible textile material made of natural and/or synthetic fibres, or a fabric, knitted fabric, foam or fleece material having a fine and evenly distributed fibre structure. The fibres that can be used in a fleece are typically in the range of 1.0 to 200 dTex, resulting in a fleece thickness from 1 to 20 mm.

Preferred embodiments of the invention comprise a permeable flexible base material manufactured from 100% synthetic fibres or a blend of synthetic and natural fibres that contains at least 20% synthetic polymers (fibre or thermoplastic binder). These fibres can be formed into a suitable fleece using carded constructions, air-laying, spin-bonding or a combination. The fleece can be stabilised using heat, printing, binder or mechanical bonding prior to the application of the adsorbent material.

The adsorbent material preferably comprises activated carbon particles held together with a binder. Such materials, including thermoplastic binders, are well known. It can be applied to the substrate by a variety of known techniques such as using an engraved roller, screen-printing etc. It is important that the characteristics, e.g. rheology, of the material to be applied should be chosen having regard to the method for its application and the nature of the substrate, so that the desired degree of penetration is achieved.

Following application, the area of the substrate that includes the adsorbent material is typically 10 to 75%. A useful adsorber weight range is 15 to 200 g/m² and a typical base fleece weight is from 40 to 250 g/m².

The adsorbent material may be applied to one or, preferably, both faces of the substrate. If applied to both, the areas of material may be in or out of phase, and preferably remain discrete. The printed areas may be described herein as "dots", but may also be in any suitable shape including other interlocking shapes, for example a cruciform shape, such that the regions between the printed areas remain flexible.

After application of the material, the product may be consolidated, e.g. using heat and/or pressure, thereby increasing its strength without necessarily losing open areas up the substrate. A typical material has a thickness of 1 mm to 20mm before consolidation, and 0.1mm to 2.0mm thereafter.

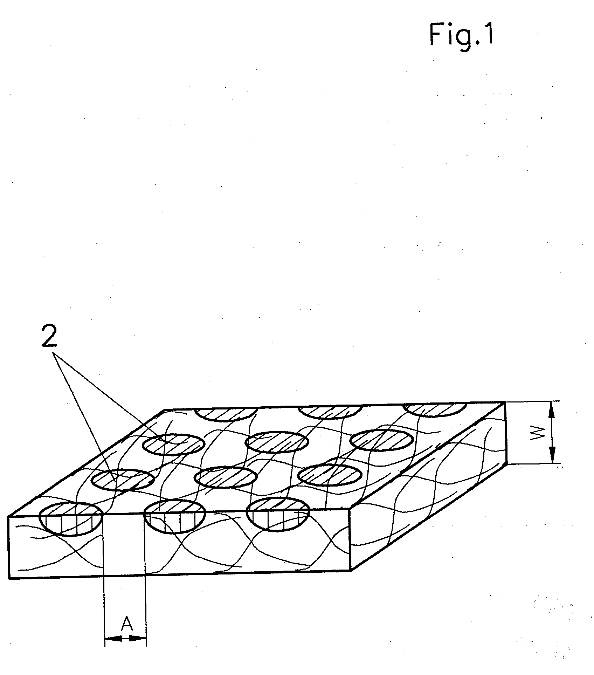

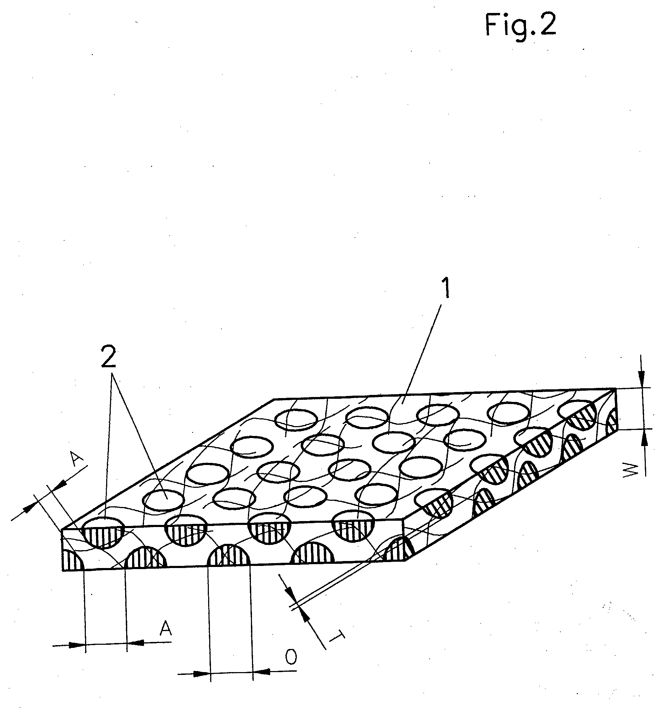

The invention will now be described by way of example only with reference to the accompanying drawings. In the drawings, each of Figures 1 and 2 is a schematic view of a product that embodies the present invention.

For the purposes of illustration, an embodiment of the invention as shown in the drawings comprises a permeable flexible base material made of a staple fibre fleece which is manufactured from synthetic fibres *via* a carding process. For example, the surface weight is 60 g/m² and the thickness 2 mm. The staple fibre fleece is strengthened by needling.

In the embodiment of Fig. 1, only the upper side of the substrate is printed, in a pattern of dots 2 comprising a mixture of powdered adsorbent and a polymeric bonding agent. Each dot 2 is imprinted into the substrate so that it is flush with the surface. For example, the dots 2 each have a diameter of some 1.0 mm. They are arranged at the same distance from each other on an equilateral triangular screen, i.e. 1.6 mm.

In the embodiment of Fig. 2, the upper and lower faces of the substrate 1 are printed. The printed areas 2 are of diameter O, and separated by a distance T between the surfaces of the printed areas, such that there is an absence of a continuous phase through the fabric. The respective patterns are out of phase. On consolidation, hemispherical agglomerates form, in which the bonding agent is concentrated. Between the printed areas 2, gaps can remain, e.g. in the region of 1.8 mm. Over its whole cross-section, the substrate 1 has permeability.

By way of example, and with particular reference to the drawings, the distance (A) between two adjacent printed areas of material is 0.25 to 1.25 times as great as the thickness W of the base material. It is also preferred that the distance (A) between two adjacent printed areas is 0.2 to 2 times as large as the smallest diameter (D) of the part surfaces. This allows minimal flow resistance together with the best possible filter effect with respect to solid particles and gaseous materials.

In a preferred embodiment of the invention, the adsorbent material is applied using a random screen print, where the distance between printed areas is variable bothy in and within the flexible adsorbent product. This minimises structure and hence break-lines in the adsorbent product.

The following Example illustrates the invention.

### Example

A dry laid non-woven substrate of 60g/m² was formed by carding, needling and binding a fibre mixture comprising 30% high loft polyester, 20% normal polyester and 50% bicomponent fibre. The small amount of acrylic binder used was then fully heat cured.

The adsorbent material comprised a ratio of solids of 71.20% activated carbon, 2.86% anionic surfactant, 1.17% protective colloid, 20.33% acrylic binder and 4.44% thickening agent. Water was added so that the overall solid content of the spray mix was 30%. This was then adjusted with ammonia to obtain a viscosity of 9000 cP.

The modified carbon binder was imprinted onto the substrate in a series of random or regular shapes, at about 70g/m² dry add-on, using a rotary screen printing technique. The carbon binder system was then fully cured by heating to 140°C. A relatively high viscosity is maintained to ensure that the printed shapes maintain much of their original shape, and so that the printing paste is forced down into the substrate such that the adsorbent areas can be protected from abrasive or mechanical disruption during use. The substrate may be printed on both sides if a higher adsorptive performance is required.

This product may be modified by compressing the adsorbent product to reduce thickness, thereby reducing the insulating effect. This is particularly important when the product is used in articles of clothing where the physiological load and bulk need to be minimal for comfortable use. Furthermore, compression results in a more flexible and textile-like product, allowing it to be incorporated into conventional clothing designs. The conditions for compression depend on the fibres used, but generally a temperature of about 180°C and a relatively light uniform pressure are suitable for permanent compression of the product.

## Claims

1. An adsorbent product which comprises a flexible substrate and, at and within a face of the substrate, a discontinuous layer of adsorbent material.

2. A product according to claim 1, wherein a discontinuous layer of adsorbent material is at and within each face of the substrate.

3. A product according to claim 1 or claim 2, wherein the adsorbent material comprises carbon and a binder.

4. A product according to claim 3, wherein the binder is an acrylic polymer.

5. A product according to any preceding claim, wherein the substrate is fibrous and the fibres thereof are present in the regions of the adsorbent material.

6. An article of clothing that comprises a product according to any preceding claim.
